# EUROPEAN PATENT SPECIFICATION

(11) **EP 4 491 903 B1**
(45) Date of publication and mention of the grant of the patent: **02.12.2026**
(21) Application number: 24186242.4
(22) Date of filing: 03.07.2024
(51) Int. Cl.: F16H 1/28, F16H 57/08

(54) **SPEED REDUCER**
DREHZAHLMINDERER
RÉDUCTEUR DE VITESSE

(30) Priority: 11.07.2023 JP 2023114057
(43) Date of publication of application: 15.01.2025
(73) Proprietor: Nabtesco Corporation, Tokyo 102-0093 (JP)
(72) Inventor: Nakamura, Koji, Chiyoda-ku, Tokyo 102-0093 (JP); Umei, Haruto, Chiyoda-ku, Tokyo 102-0093 (JP)
(74) Representative: Grünecker Patent- und Rechtsanwälte PartG mbB

(56) References cited:
- EP-A2- 3 098 477
- US-A1- 2014 274 550

## Description

### TECHNICAL FIELD

The present invention relates to a speed reducer.

### BACKGROUND

A planetary gear reducer as a speed reducer includes a sun gear, a plurality of planetary gears meshing with the sun gear, a carrier rotatably supporting the plurality of planetary gears, and an internal gear positioned radially outside the plurality of planetary gears. Such a planetary gear reducer is also disclosed in US2014/274550 A1 , which is the basis for the two part form of claim 1, and EP 3 098 477 A2.The plurality of planetary gear revolve around the sun gear. The internal gear meshes with the plurality of planetary gears. The planetary gears in a planetary gear reducer may have gears meshing with the sun gear (hereinafter referred to as the first planetary gears) and gears meshing with the internal gear (hereinafter referred to as the second planetary gears) provided separately from each other.

In this case, a first planetary gear and a second planetary gear are arranged in the axial direction on a planetary shaft that is rotatably supported by the carrier. The carrier may include two carrier plates that rotatably support axially opposite sides of the planetary shafts, in order to increase the rigidity of the entire speed reducer. A plurality of column portions connecting the two carrier plates may be provided to further increase the rigidity of the speed reducer. In many cases, each of the plurality of column portions is provided between two planetary shafts adjacent to each other in the circumferential direction (see, for example, Patent Literature 1).

### RELEVANT REFERENCE

### LIST OF RELEVANT PATENT LITERATURE

Patent Literature 1: United States Patent Application Publication No. 2017/0198785

### SUMMARY

However, in the conventional art described above, the plurality of column portions are spaced apart in the circumferential direction, and thus the column portions cannot effectively receive a moment load applied to the speed reducer depending on the position (direction) of the moment load. Therefore, there was room for improvement to increase the rigidity of the speed reducer.

The present invention provides a speed reducer that can have a further increased rigidity combined with being able to position the carrier plates to each other, and hence to assemble the carrier plates accurately.

The drawbacks of the prior art are solved with a speed reducer according to claim 1. Preferred embodiments are laid down in the dependent claims.

This configuration allows the carrier to be present as much as possible between the planetary shafts adjacent to each other in the circumferential direction. Therefore, the carrier can receive as much moment load applied to the speed reducer as possible. As a result, the rigidity of the speed reducer as well as its assembly can be further increased.

### ADVANTAGEOUS EFFECTS

The above-described speed reducers can have a further increased rigidity and easier assembly.

### BRIEF DESCRIPTION OF THE DRAWINGS

Fig. 1 schematically shows a cross section of a speed reducer relating to an embodiment of the present invention.
Fig. 2 is a plan view of a first carrier plate in the embodiment of the invention, viewed from the inner flange side.
Fig. 3 shows an example which does not fall under the scope of the present invention.
Fig. 4 shows the region in which a column portion is present under a first condition in the embodiment of the present invention.
Fig. 5 shows the region in which a column portion is present under a second condition in the embodiment of the present invention.

### DESCRIPTION OF THE PREFERRED EMBODIMENTS

The embodiments of the present invention will be hereinafter described with reference to the drawings.

### <Speed Reducer>

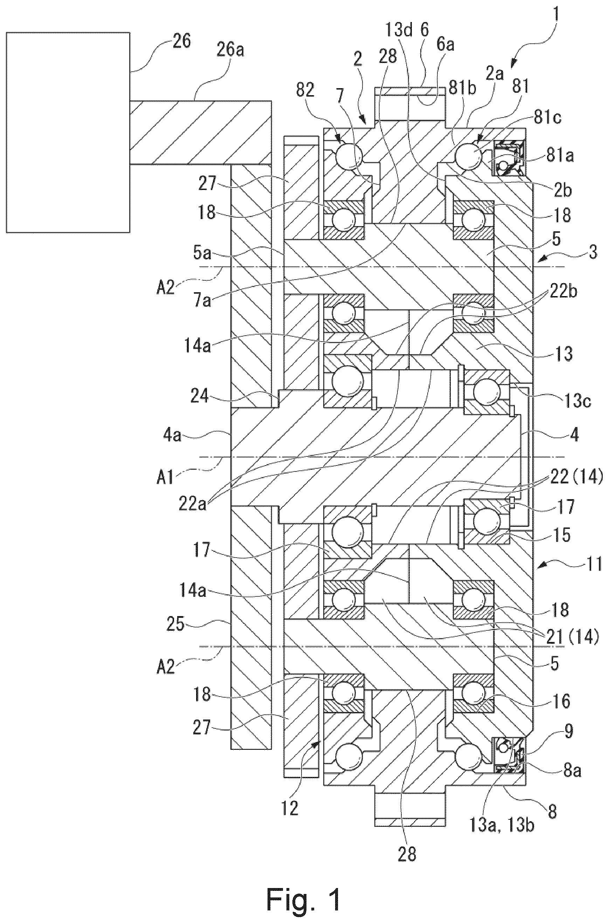

Fig. 1 is a schematic sectional view of a speed reducer 1. As shown in Fig. 1, the speed reducer 1 is what is-called a planetary gear reducer. The speed reducer 1 includes an internal gear 2 having a cylindrical shape, a carrier 3 provided rotatably relative to the internal gear 2, a sun shaft 4 arranged coaxially with a rotation axis A1 of the carrier 3, and four planetary shafts 5 arranged in the rotational direction of the carrier 3 around the rotation axis A1. In the following description, the rotation axis A1 of the carrier 3 is referred to as the carrier axis A1. The direction parallel with the carrier axis A1 is referred to as the axial direction. The rotational direction of the carrier 3 is referred to as the circumferential direction. The direction orthogonal to the axial direction and the circumferential direction (the radial direction of the carrier 3) is referred to as the radial direction.

### <Internal Gear>

An outer flange 6 having an annular shape and projecting outward in the radial direction is formed on an outer peripheral surface 2a of the internal gear 2. The outer flange 6 is used to attach the speed reducer 1 to an external device, which is not shown. The outer flange 6 has a plurality of bolt insertion holes 6a arranged at equal intervals in the circumferential direction. The speed reducer 1 is fixed to the external device by inserting bolts (not shown) into the bolt insertion holes 6a and tightening the bolts to the external device (not shown).

An inner flange 7 having an annular shape and projecting inward in the radial direction is formed on an inner peripheral surface 2b of the internal gear 2. Internal teeth 7a are formed on an inner peripheral surface of the inner flange 7. The internal teeth 7a extend over the entire axial length of the inner flange 7. Main bearings 81, 82 (a first main bearing 81 and a second main bearing 82) are provided on the inner peripheral surface 2b of the internal gear 2 on axially opposite sides of the inner flange 7. The two main bearings 81, 82 are formed symmetrically around the inner flange 7. Therefore, the following description only mentions the first main bearing 81 of the two main bearings 81 and 82. Each part of the second main bearing 82, which is denoted by the same symbol as the corresponding part of the first main bearing 81, will not be described.

The first main bearing 81 is a ball bearing, for example, and includes an inner race 81a, an outer race 81b disposed radially outside the inner race 81a, and rolling elements 81c disposed between the inner race 81a and the outer race 81b. The rolling elements 81c are spherical bodies, for example. However, this feature is not limitative, and various rolling elements such as cylindrical rollers can be used.

The outer race 81b is integrally formed with the internal gear 2. The inner race 81a is integrally formed with the carrier 3. The internal gear 2 includes a seal retainer 8 on the opposite side to the inner flange 7 with respect to the first main bearing 81. The seal retainer 8 has a cylindrical shape and projects in the axial direction. The inner peripheral surface 8a of the seal retainer 8 receives the outer peripheral surface of a seal portion 9 with an annular shape fitted thereon. The seal portion 9 provides sealing between the internal gear 2 and the carrier 3.

### <Carrier>

The carrier 3 is constituted by two carrier plates 11 and 12 (a first carrier plate 11 and a second carrier plate 12) that overlap in the axial direction. Of the two carrier plates 11 and 12, the first carrier plate 11 is rotatably supported by the internal gear 2 via the first main bearing 81. Of the two carrier plates 11 and 12, the second carrier plate 12 is rotatably supported by the internal gear 2 via the second main bearing 82.

The two carrier plates 11 and 12 are formed symmetrically around the inner flange 7. Therefore, the following description only mentions the first carrier plate 11 of the two carrier plates 11 and 12. Each part of the second carrier plate 12, which is denoted by the same symbol as the corresponding part of the first carrier plate 11, will not be described. The description of the second carrier plate 12 is limited to the differences from the first carrier plate 11.

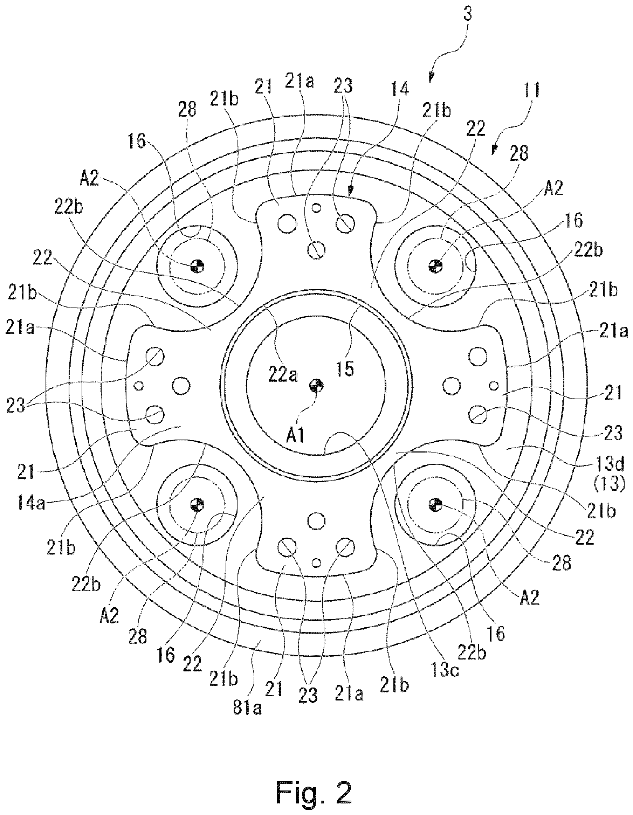

Fig. 2 is a plan view of the first carrier plate 11 viewed from the inner flange 7 side. As shown in Figs. 1 and 2, the first carrier plate 11 includes a disc-shaped plate body 13 and a column portion 14 for joining the two carrier plates 11 and 12 together. The inner race 81a of the first main bearing 81 is integrally formed on the second carrier plate 12 side of the outer peripheral surface 13a of the plate body 13. Thus, the plate body 13 of the first carrier plate 11 is rotatably supported by the internal gear 2 via the first main bearing 81. The opposite side of the outer peripheral surface 13a of the plate body 13 opposite to the second carrier plate 12 is configured as a seal surface 13b. The seal surface 13b receives the inner peripheral surface of the seal portion 9 fitted thereon. Thus, the seal portion 9 provides sealing between the internal gear 2 and the carrier 3.

The plate body 13 has a through hole 13c formed in the radially middle portion thereof. The through hole 13c extends through the plate body 13 in the axial direction. The through hole 13c is coaxial with the carrier axis A1. A first bearing housing 15 is formed on the second carrier plate 12 side of the through hole 13c. The first bearing housing 15 is a circular recess, as viewed from the axial direction. The first bearing housing 15 is coaxial with the carrier axis A1.

There is a step between the through hole 13c and the first bearing housing 15. The inner diameter of the first bearing housing 15 is larger than that of the through hole 13c. The first bearing housing 15 receives a first bearing 17. The first bearing 17 is, for example, a ball bearing. However, this feature is not limitative, and various bearings such as a cylindrical roller bearing can be used as the first bearing 17. The first bearing 17 rotatably supports the sun shaft 4.

The plate body 13 has four second bearing housings 16 arranged around the first bearing housing 15. The second bearing housings 16 are arranged at equal intervals in the circumferential direction around the carrier axis A1. The second bearing housings 16 are recesses formed in one side 13d of the plate body 13 on the second carrier plate 12 side. The second bearing housings 16 have a circular shape, as viewed from the axial direction. Each of the second bearing housings 16 receives a second bearing 18. The second bearing 18 is, for example, a ball bearing. However, this feature is not limitative, and various bearings such as a cylindrical roller bearing can be used as the second bearing 18. The second bearing 18 rotatably supports a planetary shaft 5.

The column portion 14 projects from one side 13d of the plate body 13 toward the second carrier plate 12 side. The column portion 14 is formed to avoid the second bearing housings 16 and the planetary shafts 5 (including the second planetary gears 28 described later) that are supported by the second bearing housings 16. Specifically, the column portion 14 has four column bodies 21, each of which is located between two circumferentially adjacent second bearing housings 16, and connecting portions 22, each of which connects two circumferentially adjacent column bodies 21.

Each of the column bodies 21 is formed in the shape of a quadrangular prism. The outer surface 21a of the column body 21 on the radially outer side extends along the circumferential direction. The two side surfaces 21b, which extend orthogonally to the outer surface 21a as viewed from the axial direction, are opposed to each other in the circumferential direction. Each of the connecting portions 22 is formed to connect the radially inner ends of the column bodies 21. Therefore, the connecting portion 22 is positioned radially inside the planetary shafts 5. The inner surface 22a of the connecting portion 22 on the radially inner side is shaped like an arc centered at the carrier axis A1. The outer surface 22b of the connecting portion 22 on the radially outer side is shaped like an arc to avoid the second bearing housing 16. The outer surface 22b of the connecting portion 22 is smoothly continuous to the side surfaces 21b of the column bodies 21.

Each of the connecting portions 22 does not necessarily extend over the entire interval between two column bodies 21 adjacent to each other in the circumferential direction. In other words, the connecting portions 22 do not necessarily extend over the entire circumference. Each of the connecting portions 22 should extend from the side surface 21b of the column body 21 for a predetermined length in the circumferential direction. This will be described in detail later. The column bodies 21 and the connecting portions 22 project from one side 13d of the plate body 13 by the same length. Therefore, the distal end 14a of the column portion 14 is planar. The projecting length of the column bodies 21 and the connecting portions 22 projecting from one side 13d of the plate body 13 is hereinafter referred to as the projecting length of the column portion 14.

With this configuration, the first carrier plate 11 and the second carrier plate 12 are joined together by connecting the respective distal ends 14a of their column portions 14. This creates a certain amount of spacing between the plate bodies 13 of the carrier plates 11 and 12. The projecting length of the column portion 14 is determined so that this amount of spacing is larger than the axial length of the inner flange 7 in the internal gear 2. The inner flange 7 is positioned between the two plate bodies 13.

**In the** distal end 14a of each of the column portions 14, each of the regions corresponding to the column bodies 21 has a plurality (for example, four in this embodiment) of pin holes 23. By press-fitting a pin (not shown) into each of the pin holes 23, the first carrier plate 11 and the second carrier plate 12 are positioned relative to each other. The second carrier plate 12 does not have a seal surface 13b, unlike the first carrier plate 11. For this reason, the axial thickness of the second carrier plate 12 is smaller than that of the first carrier plate 11.

### <Sun Shaft>

The sun shaft 4 is rotatably supported by the respective first bearings 17 provided on the carrier plates 11 and 12. The end 4a of the sun shaft 4 on the second carrier plate 12 side projects outward in the axial direction through the first bearing 17. On this projecting portion, a sun gear 24 and an input gear 25 are provided to be arranged in this order from the first bearing 17 side. The sun gear 24 is integrated with the sun shaft 4. The input gear 25 is fitted and fixed to the sun shaft 4. The input gear 25 rotates integrally with the sun shaft 4. The input gear 25 is meshed with a drive gear 26a of an electric motor 26, for example. Thus, the input gear 25 receives a motive power.

### <Planetary Shafts>

The planetary shafts 5 are rotatably supported by the second bearings 18 provided on the carrier plates 11 and 12. The planetary shafts 5 rotate around the respective rotation axes A2. The rotation axes A2 will be hereinafter referred to as the planetary axes A2. The planetary axes A2 are parallel to the carrier axis A1. The ends 5a of the planetary shafts 5 on the second carrier plate 12 side project outward in the axial direction through the second bearings 18. First planetary gears 27 are fitted and fixed to these projecting portions. The first planetary gears 27 are meshed with the sun gear 24. A second planetary gear 28 is integrated with the portion of each planetary shaft 5 between the two second bearings 18. The second planetary gear 28 is meshed with the internal teeth 7a of the inner flange 7.

### <Operation of Speed Reducer>

Next, an operation of the speed reducer 1 will now be described. When the electric motor 26 is driven, the sun gear 24 (sun shaft 4) is rotated via the drive gear 26a and the input gear 25. Then the first planetary gears 27, which are meshed with the sun gear 24, are rotated. The second planetary gears 28 are rotated integrally with the first planetary gears 27. The second planetary gears 28 are meshed with the internal teeth 7a of the inner flange 7. Therefore, each planetary gears 27 and 28 and planetary shaft 5 rotate around the respective planetary axis A2, while revolving around the carrier axis A1.

As each planetary gears 27 and 28 and planetary shaft 5 revolve, the carrier 3 is rotated relative to the internal gear 2. If the internal gear 2 is fixed to an external device (not shown), the carrier 3 serves as an output unit. Specifically, if a driven member (not shown) is attached to the carrier 3, the rotation of the drive gear 26a is decelerated and output to the driven member via the carrier 3. It is also possible that, for example, the carrier 3 is fixed to an external device, and the internal gear 2 serves as the output unit.

During driving of the speed reducer 1, the carrier 3 is subjected to a moment load. The position (direction) of the moment load changes as the carrier 3 or the internal gear 2 rotates. The carrier 3 has the column portion 14. The column portion 14 extends over the entire circumference radially inside the planetary shafts 5 (second planetary gears 28). Therefore, the moment load can be received by the column portion 14 regardless of the position of the moment load.

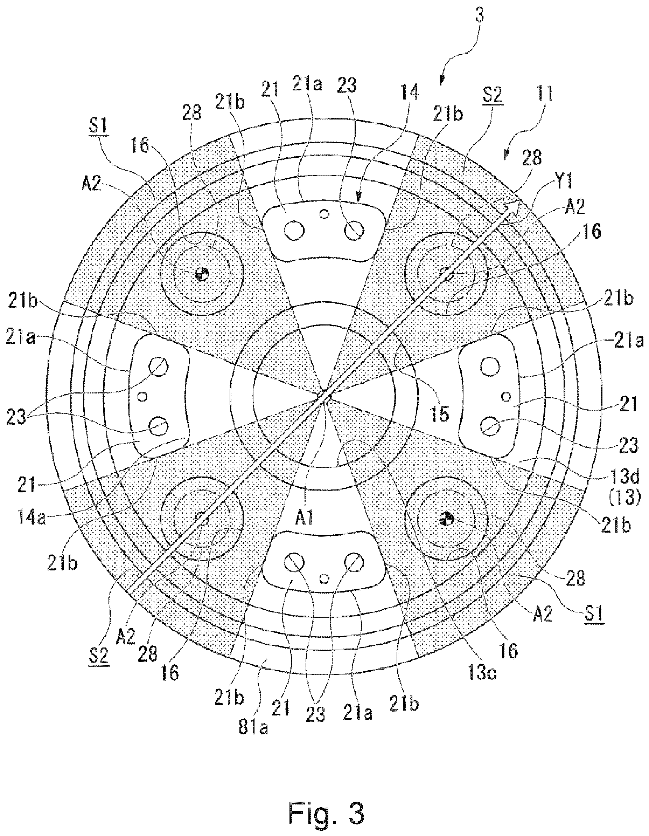

The following describes the case where the column portion 14 includes only the column bodies 21 and do not include the connecting portions 22. This configuration does not form part of the claimed invention, but shows an example of the background art. Fig. 3 explains the rigidity of the speed reducer 1 (carrier 3) against a moment load. Fig. 3 corresponds to Fig. 2 referred to in the above. Fig. 3 shows only the column bodies 21 in comparison with Fig. 2.

As shown in Fig. 3, when the column portion 14 includes only the column bodies 21, the column portion 14 does not cover some of the positions of the moment load (see, for example, the arrow Y1). This causes insufficient rigidity of the carrier 3 (speed reducer 1). In particular, when an even number of planetary shafts 5 (first planetary gears 27 and second planetary gears 28) are provided, the regions without the column portion 14 are large (see the regions S1 and S2 in Fig. 3). By contrast, in this embodiment, the column portion 14 includes connecting portions 22 in addition to the column bodies 21. The connecting portions 22 ensure the rigidity of the carrier 3 against a moment load even when the position of the moment load changes.

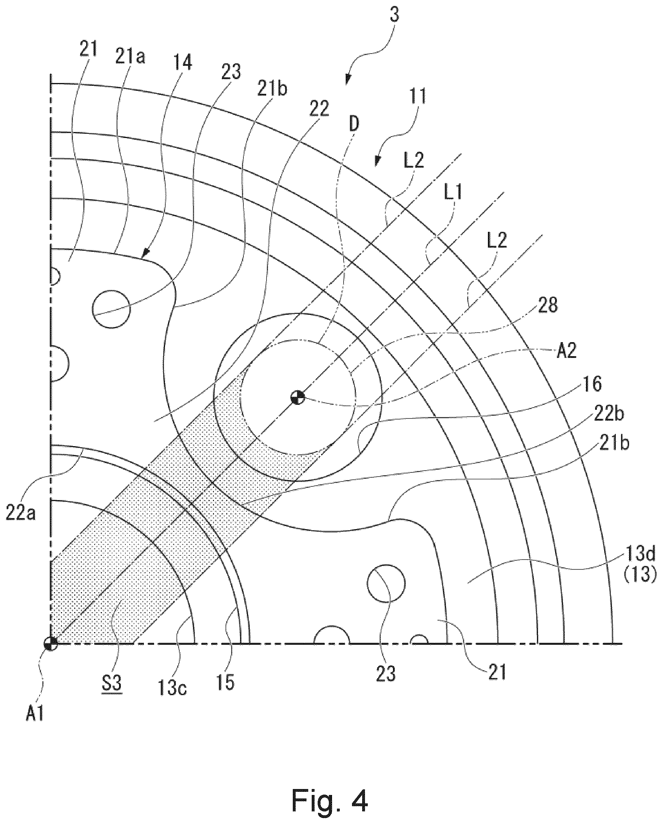

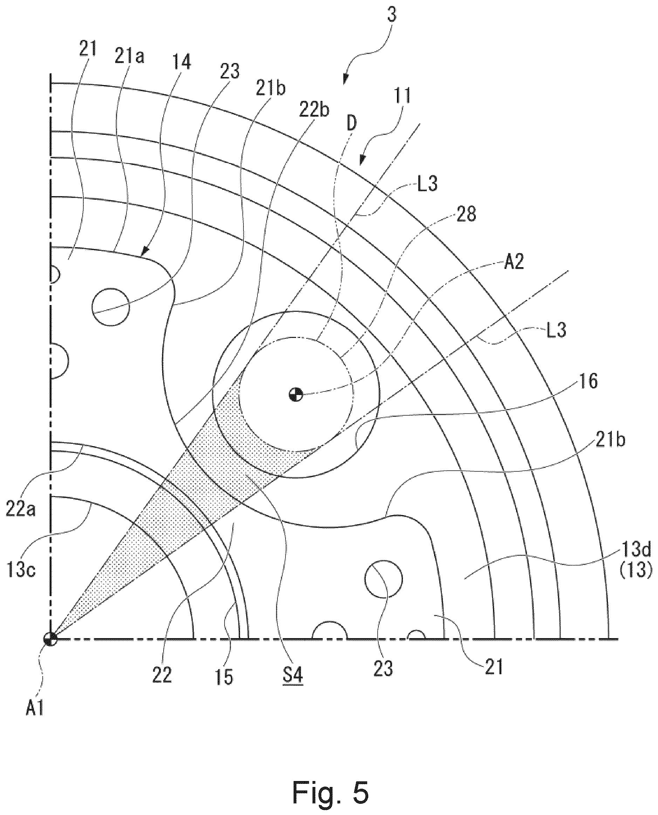

Figs. 4 and 5 show the region in which the column portion 14 is present. Figs. 4 and 5 show only one-fourth of the circumference of the carrier 3 for convenience of explanation. As described above, the connecting portions 22 do not necessarily extend over the entire circumference. As shown in Fig. 4, a connecting portion 22 (column portion 14) should be present at least in the region S3 between two second lines L2 parallel to the first line L1 connecting the carrier axis A1 and the planetary axis A2. The two second lines L2 are tangent to the addendum circle diameter D of the second planetary gear 28. This condition is hereinafter referred to as the first condition.

As shown in Fig. 5, a connecting portion 22 (column portion 14) should preferably be present in the region S4 between two third lines L3 passing through the carrier axis A1. The two third lines L3 are tangent to the addendum circle diameter D of the second planetary gear 28. This condition is hereinafter referred to as the second condition.

In the embodiment described above, the column portion 14 is formed to satisfy at least the first condition. Therefore, for example, compared to the case where only the column bodies 21 are provided in the carrier 3, a portion of the column portion 14 other than the column bodies 21 (connecting portions 22) can be projected on both sides of the column body 21 in the circumferential direction. In other words, the carrier 3 (column portion 14) can be present as much as possible between the planetary shafts 5 adjacent to each other in the circumferential direction. Therefore, the carrier 3 can receive as much moment load applied to the speed reducer 1 as possible. As a result, the rigidity of the speed reducer 1 can be increased.

The carrier 3 includes two carrier plates 11 and 12 and a column portion 14 connecting the two carrier plates 11 and 12. With this configuration of the carrier 3, the carrier 3 can be easily formed to satisfy at least the first condition. As a result, the rigidity of the speed reducer 1 can be easily increased. If the carrier 3 is formed to satisfy the second condition, the connecting portions 22 can be further projected in the circumferential direction compared to the first condition. Thus, the carrier 3 can be present more between the planetary shafts 5 adjacent to each other in the circumferential direction. Therefore, the carrier 3 can receive more moment load applied to the speed reducer 1. As a result, the rigidity of the speed reducer 1 can be increased securely.

When the speed reducer 1 includes an even number of planetary shafts 5 (first planetary gears 27, second planetary gears 28), as in this embodiment, the regions that are less capable of receiving moment loads are large (see Fig. 3, for example). Therefore, the above configuration can be suitably applied when an even number of planetary shafts 5 are provided.

The column portion 14 includes the column bodies 21 and the connecting portions 22. The connecting portions 22 are positioned radially inside the planetary shafts 5. In a structure as in the speed reducer 1 that separately includes the first planetary gears 27 meshed with the sun gear 24 and the second planetary gears 28 meshed with the internal teeth 7a, a space is formed radially inside the second planetary gears 28. This space is effectively utilized to dispose the connecting portions 22. Therefore, the connecting portions 22 can be formed to extend over the entire circumference without increasing the size of the speed reducer 1. The rigidity of the speed reducer 1 can be increased more securely.

The outer surface 22b of the connecting portion 22 on the radially outer side is shaped like an arc to avoid the second bearing housing 16. The connecting portion 22 is also subjected to loads other than moment loads. The arc-like shape of the outer surface 22b of the connecting portion 22 prevents a localized stress from being applied to the connecting portion 22. Thus, the rigidity of the speed reducer 1 can be further increased.

The embodiments described herein are not intended to necessarily limit the present invention to any specific embodiments. Various modifications can be made to these embodiments without departing from the true scope of the present invention as defined in the claims.

It was described in the above embodiments that the carrier 3 is rotatably supported by the internal gear 2. However, this configuration is not limitative, but the carrier 3 can have any configuration in which it is rotatable relative to the internal gear 2. The carrier 3 may be rotatably supported by a member other than the internal gear 2.

It was described in the above embodiments that the speed reducer 1 includes four planetary shafts 5 (first planetary gears 27, second planetary gears 28). However, this configuration is not limitative, but the speed reducer 1 may include any plural number of planetary shafts 5. The number of planetary shafts 5 is not limited to an even number, but can be an odd number. This configuration produces the same effect as in the above embodiments.

### LIST OF REFERENCE NUMBERS

- 1: speed reducer
- 2: internal gear
- 3: carrier
- 4: sun shaft
- 5: planetary shaft
- 7a: internal tooth
- 11: first carrier plate (carrier plate)
- 12: second carrier plate (carrier plate)
- 14: column portion
- 21: column body
- 22: connecting portion
- 22b: outer surface (side surface)
- 24: sun gear
- 27: first planetary gear
- 28: second planetary gear
- A1: carrier axis (rotation axis of carrier)
- A2: planetary axis (rotation axis of planetary shaft relative to carrier (carrier plate))
- L1: first line
- L2: second line
- L3: third line
- S1, S2, S3, S4: region

## Claims

1. A speed reducer (1) comprising:
an intemal gear (2) having intemal teeth (7a);
a carrier (3) provided rotatably relative to the internal gear (2);
a sun shaft (4) provided coaxially with a rotation axis (A1) of the carrier (3); and
a plurality of planetary shafts (5) spaced in a circumferential direction around the rotation axis of the carrier (3),
wherein the sun shaft (4) is rotatably supported by the carrier (3), and the sun shaft (4) has a sun gear (24),
wherein the plurality of planetary shafts (5) are rotatably supported by the carrier (3) and configured to revolve relative to the sun shaft (4),
wherein each of the plurality of planetary shafts (5) includes:
a first planetary gear (27) meshing with the sun gear (24); and
a second planetary gear (28) meshing with the internal gear (2),
wherein the carrier (3) includes:
two carrier plates (11, 12) rotatably supported on axially opposite sides of the internal teeth (7a) of the internal gear (2); and
a column portion (14) connecting the two carrier plates (11, 12);
wherein the carrier (3) is present between two of the plurality of planetary shafts (5) adjacent to each other in the circumferential direction,
wherein the column portion includes:
a plurality of column bodies (21) each disposed between two of the plurality of planetary shafts (5) adjacent to each other in the circumferential direction; and
a connecting portion (22) connecting two of the plurality of column bodies (21) adjacent to each other in the circumferential direction,
wherein the column portion (14) is disposed between two of the plurality of planetary shafts (5) adjacent to each other in the circumferential direction,
wherein as viewed from an axial direction, the carrier (3) and the column portion (14) are additionally present in a region (S3) between two second lines (L2) parallel to a first line (L1), the first line (L1) connecting the rotation axis (A1) of the carrier (3) and a rotation axis (A2) of any of the plurality of planetary shafts (5) rotating relative to the carrier (3),
wherein the connecting portion (22) is positioned inside the plurality of planetary shafts (5) in a radial direction of the internal gear (2), and
wherein the two second lines (L2) are tangent to an addendum circle diameter (D) of the second planetary gear (28),
**characterized in that**
in a distal end (14a) of each of the column portions (14), each of the regions corresponding to the column bodies (21) has a plurality of pin holes (23).

2. The speed reducer (1) of claim 1,
wherein the carrier (3) is present in a region (S4) between two third lines (L3) passing through the rotation axis of the carrier (3), and
wherein the two third lines (L3) are tangent to an addendum circle diameter (D) of the second planetary gear (28).

3. The speed reducer (1) of claim 1, wherein the plurality of planetary shafts (5) comprise an even number of planetary shafts (5).

4. The speed reducer (1) of claim 1, wherein a side surface (22b) of the connecting portion (22) facing toward corresponding one of the plurality of planetary shafts (5) is shaped like an arc as viewed from the axial direction.

## Patentansprüche

1. Untersetzungsgetriebe (1), umfassend:
ein Hohlrad (2) mit Innenverzahnung (7a);
einen Träger (3), der relativ zu dem Hohlrad (2) drehbar vorgesehen ist;
eine Sonnenwelle (4), die koaxial zu einer Drehachse (A1) des Trägers (3) vorgesehen ist; sowie
eine Vielzahl von Planetenwellen (5), die in einer Umfangsrichtung um die Drehachse des Trägers (3) herum beabstandet sind,
wobei die Sonnenwelle (4) über den Träger (3) drehbar gelagert ist und die Sonnenwelle (4) ein Sonnenrad (24) aufweist,
wobei die Vielzahl von Planetenwellen (5) über den Träger (3) drehbar gelagert und so ausgeführt sind, dass sie relativ zu der Sonnenwelle (4) umlaufen,
wobei jede der Vielzahl von Planetenwellen (5) aufweist:
ein erstes Planetenrad (27), das mit dem Sonnenrad (24) kämmt; sowie
ein zweites Planetenrad (28), das mit dem Hohlrad (2) kämmt,
wobei der Träger (3) aufweist:
zwei Trägerplatten (11, 12), die an axial gegenüberliegenden Seiten der Innenverzahnung (7a) des Hohlrades (2) drehbar gelagert sind; und
einen Säulenabschnitt (14), der die zwei Trägerplatten (11, 12) verbindet;
wobei sich der Träger (3) zwischen zwei in der Umfangsrichtung einander benachbarten Planetenwellen der Vielzahl von Planetenwellen (5) befindet,
wobei der Säulenabschnitt aufweist:
eine Vielzahl von Säulenkörpern (21), die jeweils zwischen zwei in der Umfangsrichtung einander benachbarten Planetenwellen der Vielzahl von Planetenwellen (5) angeordnet sind; sowie
einen Verbindungsabschnitt (22), der zwei in der Umfangsrichtung einander benachbarte Säulenkörper der Vielzahl von Säulenkörpern (21) verbindet,
wobei der Säulenabschnitt (14) zwischen zwei in der Umfangsrichtung einander benachbarten Planetenwellen der Vielzahl von Planetenwellen (5) angeordnet ist,
wobei, in einer axialen Richtung betrachtet, sich der Träger (3) und der Säulenabschnitt (14) zusätzlich in einem Bereich (S3) zwischen zwei zweiten Linien (L2) parallel zu einer ersten Linie (L1) befinden und die erste Linie (L1) die Drehachse (A1) des Trägers (3) und eine Drehachse (A2) einer beliebigen der Vielzahl von Planetenwellen (5) verbindet, die sich relativ zu dem Träger (3) drehen,
wobei der Verbindungsabschnitt (22) in einer radialen Richtung des Hohlrades (2) innerhalb der Vielzahl von Planetenwellen (5) positioniert ist, und
wobei die zwei zweiten Linien (L2) einen Kopfkreisdurchmesser (D) des zweiten Planetenrades (28) tangieren,
**dadurch gekennzeichnet, dass**
in einem distalen Ende (14a) jedes der Säulenabschnitte (14) jeder der den Säulenkörpern (21) entsprechenden Bereiche eine Vielzahl von Stiftlöchern (23) aufweist.

2. Untersetzungsgetriebe (1) nach Anspruch 1,
wobei sich der Träger (3) in einem Bereich (S4) zwischen zwei dritten Linien (L3) befindet, die durch die Drehachse des Trägers (3) verlaufen, und
wobei die zwei dritten Linien (L3) einen Kopfkreisdurchmesser (D) des zweiten Planetenrades (28) tangieren.

3. Untersetzungsgetriebe (1) nach Anspruch 1, wobei die Vielzahl von Planetenwellen (5) eine gerade Anzahl von Planetenwellen (5) umfasst.

4. Untersetzungsgetriebe (1) nach Anspruch 1, wobei eine Seitenfläche (22b) des Verbindungsabschnitts (22), die einer entsprechenden der Vielzahl von Planetenwellen (5) zugewandt ist, in der axialen Richtung betrachtet, wie ein Bogen geformt ist.

## Revendications

1. Réducteur de vitesse (1) comprenant :
un engrenage interne (2) ayant des dents internes (7a) ;
un porte-satellites (3) monté de manière rotative par rapport à l'engrenage interne (2) ;
un axe solaire (4) monté coaxialement à un axe de rotation (A1) du porte-satellites (3) ; et
une pluralité d'axes planétaires (5) espacés en direction circonférentielle autour de l'axe de rotation du porte-satellites (3),
dans lequel l'axe solaire (4) est supporté de manière rotative par le porte-satellites (3) et l'axe solaire (4) comporte un engrenage solaire (24),
dans lequel les axes de la pluralité d'axes planétaires (5) sont supportés de manière rotative par le porte-satellites (3) et configurés pour tourner par rapport à l'axe solaire (4),
dans lequel chaque axe de la pluralité d'axes planétaires (5) inclut :
un premier engrenage planétaire (27) s'engrenant avec l'engrenage solaire (24) ; et
un deuxième engrenage planétaire (28) s'engrenant avec l'engrenage interne (2),
dans lequel le porte-satellites (3) inclut :
deux plaques de porte-satellites (11, 12) supportées de manière rotative sur des côtés axiaux opposés des dents internes (7a) de l'engrenage interne (2) ; et
une portion de colonne (14) connectant les deux plaques de porte-satellites (11, 12) ;
dans lequel le porte-satellites (3) est présent entre deux axes de la pluralité d'axes planétaires (5) adjacents en direction circonférentielle,
dans lequel la portion de colonne inclut :
une pluralité de corps de colonne (21) disposés chacun entre deux axes de la pluralité d'axes planétaires (5) adjacents en direction circonférentielle ; et
une portion de connexion (22) connectant deux corps de la pluralité de corps de colonne (21) adjacents en direction circonférentielle,
dans lequel la portion de colonne (14) est disposée entre deux axes de la pluralité d'axes planétaires (5) adjacents en direction circonférentielle,
dans lequel, vu en direction axiale, le porte-satellites (3) et la portion de colonne (14) sont en outre présents dans une région (S3) située entre deux deuxièmes lignes (L2) parallèles à une première ligne (L1), la première ligne (L1) connectant l'axe de rotation (A1) du porte-satellites (3) et un axe de rotation (A2) d'un axe quelconque de la pluralité d'axes planétaires (5) tournant par rapport au porte-satellites (3),
dans lequel la portion de connexion (22) est positionnée à l'intérieur de la pluralité d'axes planétaires (5) en direction radiale de l'engrenage interne (2), et
dans lequel les deux deuxièmes lignes (L2) sont tangentes au diamètre du cercle de tête (D) du deuxième engrenage planétaire (28),
**caractérisé en ce qu'**à une extrémité distale (14a) de chacune des portions de colonne (14), chacune des régions correspondant aux corps de colonne (21) comporte une pluralité de trous de goupille (23).

2. Réducteur de vitesse (1) selon la revendication 1, dans lequel le porte-satellites (3) est présent dans une région (S4) située entre deux troisièmes lignes (L3) passant par l'axe de rotation du porte-satellites (3), et dans lequel les deux troisièmes lignes (L3) sont tangentes au diamètre du cercle de tête (D) du deuxième engrenage planétaire (28).

3. Réducteur de vitesse (1) selon la revendication 1, dans lequel la pluralité d'axes planétaires (5) comprend un nombre pair d'axes planétaires (5).

4. Réducteur de vitesse (1) selon la revendication 1, dans lequel une surface latérale (22b) de la portion de connexion (22) faisant face à un axe correspondant de la pluralité d'axes planétaires (5) présente une forme d'arc vu en direction axiale.
